# EUROPÄISCHE PATENTSCHRIFT

(11) **EP 0 919 272 B1**
(45) Veröffentlichungstag und Bekanntmachung des Hinweises auf die Patenterteilung: **16.01.2002**
(21) Anmeldenummer: 97119026.9
(22) Anmeldetag: 31.10.1997
(51) Int. Cl.: B01D 46/10, B60H 3/06

(54) **Filterelement mit Filterelementaufnahme**
Filterelement with filterelement retainer
Elément filtrant avec boîtier pour élément filtrant

(43) Veröffentlichungstag der Anmeldung: 02.06.1999
(73) Patentinhaber: Clinix GmbH, 9400 Rorschach (CH)
(72) Erfinder: Hammes, Frank C., 9326 Horn (CH)
(74) Vertreter: Riebling, Peter, Dr.-Ing.

(56) Entgegenhaltungen:
- EP-B- 0 478 895
- WO-A-94/01200
- DE-C- 3 441 918
- US-A- 5 222 488

## Beschreibung

Die Erfindung betrifft ein Filterelement mit Filterelementaufnahme nach dem Oberbegriff des Patentanspruchs 1.
Filterelemente werden heute in großen Stückzahlen in der Lüftungs- und Reinraumtechnik eingesetzt. Sie bestehen aus einem stabilen Rahmen in dem ein Filterpack aus einem gefalteten Filtermedium eingegossen ist. Diese Filterelemente, speziell Schwebstoff-Filterelemente, müssen absolut dicht sein, d.h. sie dürfen keine Löcher oder Durchlässe aufweisen, durch welche das zu filternde Medium am Filterelement vorbeiströmen kann. Die Filterelemente werden dann einzeln oder in Kombination mit anderen Filterelementen in Filteraufnahmen von Lüftungsanlagen und -geräten eingespannt. Hierbei ist die Dichtung zwischen Filterelement und Filteraufnahme kritisch, da sonst die Luft den kleinsten Widerstand sucht und am Filterelement ungefiltert vorbeiströmt. Um dies zu vermeiden wird zwischen Filterelement und der Filteraufnahme ein Dichtelement, z.B. ein Dichtgummi, angebracht. Ein derartiges Filterelement ist in der EP-B-0 478 895 offenbart.

In der WO-A-94/01200 ist ein Filterelement mit Filterelement-Aufnahme offenbart, bei dem das Filterelement in die Filterelement-Aufnahme einsetzbar ist und einen Filterelement-Kasten umfasst, in welchem ein Filterpack eingesetzt ist. Zur Abdichtung ist ebenfalls ein Dichtungsmedium zwischen dem Filterelement und der Filterelement-Aufnahme angeordnet.

Die bekannten Filterelemente und deren Filteraufnahmen haben den Nachteil, daß sie relativ aufwendig aufgebaut sind, um den oben angesprochenen Erfordernissen der Abdichtung zu genügen. Dies macht die Herstellung material- und kostenintensiv und bringt Probleme bei der umweltgerechten Entsorgung.

Obige Aussagen gelten in übertragenem Sinne auch bei Filterelementen für flüssige Medien, z.B. für Wasser- oder Ölfilter.

Die Aufgabe der vorliegenden Erfindung besteht darin, ein Filterelement mit Filteraufnahme der eingangs beschriebenen Art derart weiterzubilden, daß sich ein einfacher, kostengünstiger und umweltfreundlicher Aufbau der Filtereinheit ergibt.

Die Aufgabe wird erfindungsgemäß durch die kennzeichnenden Merkmale des Patentanspruchs 1 gelöst.

Erfindungsgemäß besteht die beschriebene Filtereinheit aus einem Filterelement-Kasten mit zugeordnetem Filterelement-Deckel, in welchem Kasten ein entsprechender Filterpack aufgenommen wird. Durch die spezielle Ausbildung des Kastens und des Deckels, und die Montage nach Art einer Nut/Feder-Verbindung, wird der Filterpack absolut dicht im Kasten gehalten, ohne daß zusätzliche Dichtungsmittel, wie z.B. Gummi- oder Silikondichtungen, notwendig sind. Filterelement-Kasten und -Deckel bestehen vorzugsweise aus expandiertem Polystyrol (EPS).
Das Filterelement kann nun in eine entsprechende Filterelement-Aufnahme eingesetzt werden, die mit angeformten Dichtungsstegen in zugeordnete Dichtungsrillen des Filterelement-Deckels oder -Kastens abdichtend eingreift. Auch hier sind für die Dichtwirkung keine zusätzlichen Gummi- oder Silikondichtungen notwendig.

Der hier beschriebene Aufbau eines Filterelements und der Einsatz in der korrespondierenden Filterelement-Aufnahme weist gegenüber herkömmlichen Filterelementen und Filteraufnahmen die folgenden Vorteile auf:
- Durch die Verwendung von zwei EPS (expandiertes Polystyrol) Formteilen in der Rahmenkonstruktion ergeben sich substantielle Materialeinsparungen gegenüber Rahmenkonstruktionen aus Metall oder Spanplatten. Die Werkzeugkosten für die EPS Formen sind wesentlich günstiger als die Spritzgußwerkzeuge für Rahmenkonstruktionen aus herkömmlichen Thermokunststoffen.
- Einsparung in Verarbeitungskosten, da die Rahmenkonstruktion inkl. Dichtung nur aus zwei Bauteilen besteht, dem Filterelement-Kasten und dem Filterelement-Deckel, die leicht miteinander verbindbar sind: Einbringen des Klebstoffs in den umlaufenden Freiraum zwischen Filterelement-Kasten und Filterpack, und Aufpressen des Deckels auf den Kasten.
- Das Filterelement selbst enthält kein Metall und ist somit vollständig veraschbar.
- Das Filterelement ist sehr leicht und kann mit niedrigem Kraftaufwand kompaktisiert werden. Dies reduziert die Entsorgungskosten.
- Zusätzliche Gummi- oder Silikondichtungen entfallen.
- Es tritt kein Verschleiß der Dichtung auf, da die Filterelement-Aufnahme keine verschleißbaren Komponenten, wie z.B. Dichtungen, aufweist.
- Einsparung in Verarbeitungskosten, da bei Mini-pleat Filterpacks mit Kantenabdichtung kein Vergießen der offenen Faltenseiten notwendig ist. Die Abdichtung wird durch das Einbringen von Klebstoff in den entsprechenden Freiraum erreicht.
- Niedriger Materialanteil der Rahmenkonstruktion im Verhältnis zur Filterfläche. Dies bedeutet ein niedriges Abfall/Leistungsverhältnis.

Vorteilhaft wird als Filterpack ein plissiertes Filtermedium verwendet, welches mittels Klebstoffraupen-Abstandhaltern im bekannten Mini-pleat-Verfahren (spezielles Faltverfahren) zusammengehalten wird.

Alternativ kann auch ein Filterpack bestehend aus einer oder mehreren Lagen von Vliesstoff verwendet werden.

Weitere Einzelheiten und Merkmale der Erfindung ergeben sich aus der nachfolgenden Beschreibung zweier Ausführungsbeispiele der Erfindung anhand der beiliegenden Zeichnungen: Es zeigt:
Figur 1: einen Schnitt durch das erfindungsgemäße Filterelement mit Filterelementaufnahme in zerlegtem Zustand;
Figur 2: einen Schnitt durch das zusammengesetzte Filterelement mit Mini-pleat Filterpack beim Einsetzen in die Filterelementaufnahme;
Figur 3: einen Schnitt durch eine weitere Ausführungsform des Filterelements mit Filterelementaufnahme in zerlegtem Zustand;
Figur 4: ein herkömmliches, in die Filterelement-Aufnahme eingesetztes Filterelement.

Beschreibung der einzelnen Komponenten anhand der Zeichnungsfiguren:
Der Filterelement-Kasten 1 und der Filterelement-Deckel 4 bestehen aus je einem Formteil aus expandiertem Polystyrol (EPS) oder einem ähnlichen, von der Struktur her stabilen aber nachgiebigen Material.
Der Filterelement-Kasten 1 ist rechteckig und rahmenförmig im Aufbau. Auf einer Seite wird der Kasten mit Verstrebungen 2 zusammengehalten. Auf der anderen Seite ist er offen. Auf der offenen Seite weist die Kastenwand nach außen eine Verjüngung 3 auf.

Der Filterelement-Deckel 4 besteht aus einem umlaufenden, rechteckigen Rahmen, der zur Stabilität nach innen durch Verstrebungen 5 verstärkt ist. Auf der einen Seite, die auf den Kasten 1 aufgesetzt wird, weist der Deckel 4 einen umlaufenden Versatz 6 auf, der beim Aufsetzen des Deckels 4 auf den Kasten 1 im Bereich der Verjüngung 3 in den Kasten 1 eintaucht. Auf der anderen Seite weist der Deckel 4 eine oder mehrere umlaufende Dichtungsrillen 7 auf. Alternativ können die Dichtungsrillen auch im Boden des Kastens integriert sein.

Der Filterpack 8 besteht aus einem plissierten Filtermedium 9, welches mittels Klebstoffraupen-Abstandhaltern 19 im bekannten Mini-pleat-Verfahren (spezielles Faltverfahren) zusammengehalten wird. Der Filterpack 8 ist an den offenen zwei Seiten im Randbereich mit einer zwischen den Falten dichtenden Klebstoffraupen-Kantenabdichtung 10 im bekannten Edge-Sealing Verfahren (Kantenabdichtung) nach außen abgedichtet. Es ergibt sich somit eine Art Filtertasche, so daß die Luft an den zwei Seiten, wo ansonsten die Falten nach außen offen wären, nicht mehr abströmen kann.

Das Edge-Sealing wird durch die Verklebung des Filterpacks im Filterrahmen durch die Füllung des umlaufenden Freiraums 18 und dem Aufsatz des Deckels perfekt ergänzt. Die zu filternde Luft kann hiernach nurmehr durch das Filterpack strömen.

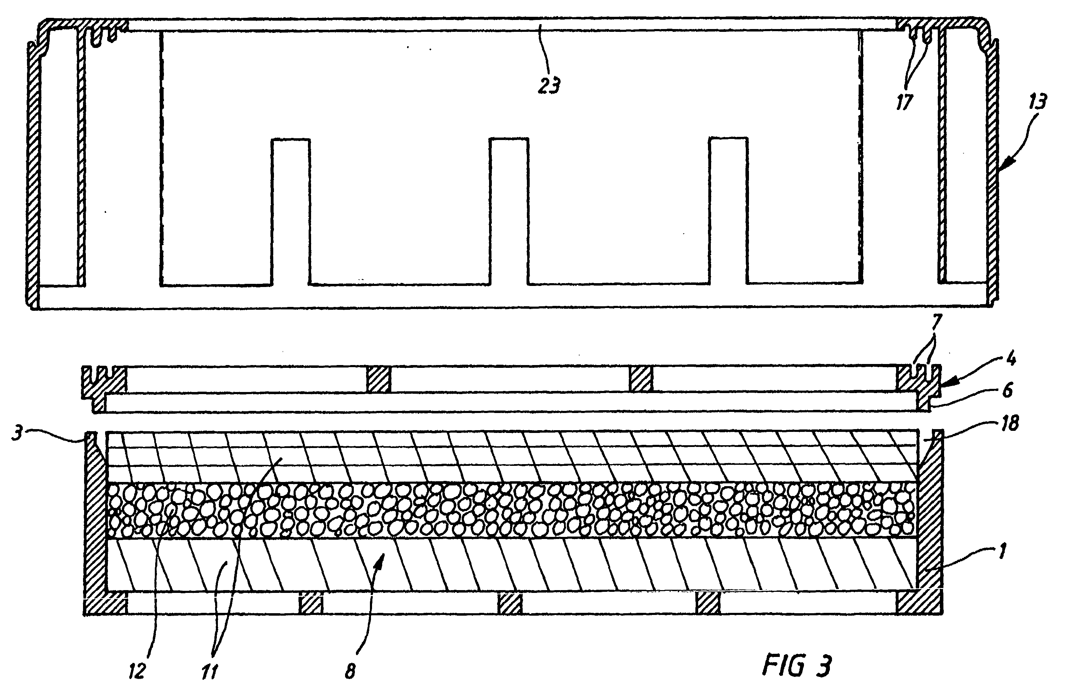

Alternativ zum Faltenfilter kann der Filterpack 8 auch aus einer oder mehreren Lagen von mehrere Millimeter dickem Vliesstoff 11 bestehen, wie es in Figur 3 dargestellt ist. Zwischen den Vlieslagen können diverse Adsorptionsmedien 12, wie z.B. Aktivkohle, eingebracht sein.

Die Filterelement-Aufnahme 13 besteht aus einer stabilen, rechteckigen und offenen Tragrahmenkonstruktion 14 mit optional davon beabstandeten Trennwänden 15, die einen Einschub 16 definieren. Dazu ist die Filterelement-Aufnahme auf einer Seite vollständig offen und weist auf der anderen Seite eine relativ große Durchgangsöffnung 23 für das zu filternde Medium auf. Im Bereich der oberen oder unteren Flachseite besitzt die Aufnahme einen oder mehrere umlaufende Dichtungsstege 17, die in das Innere der Filterelement-Aufnahme weisen. Der Tragrahmen 14 kann aus Kunststoff, Metall oder ähnlich stabilem Material gefertigt sein und bildet einen permanenten Bestandteil einer Filteranlage, einer Filtrationseinheit oder eines Luftreinigungsgerätes bzw. einer Luftreinigungsanlage.

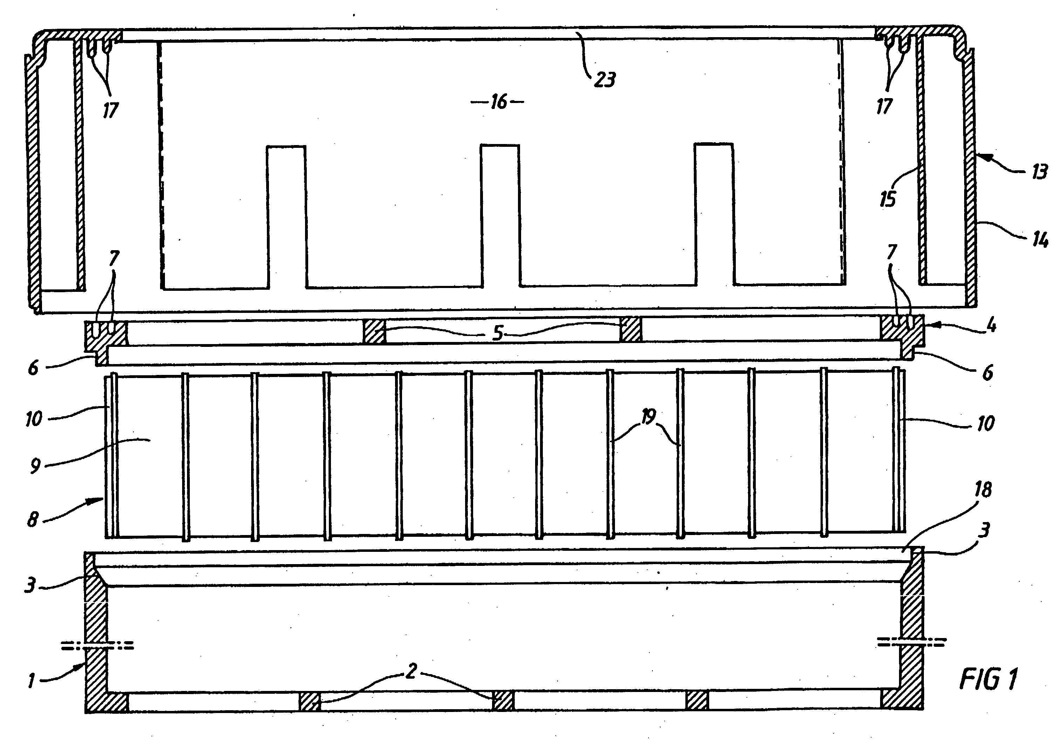

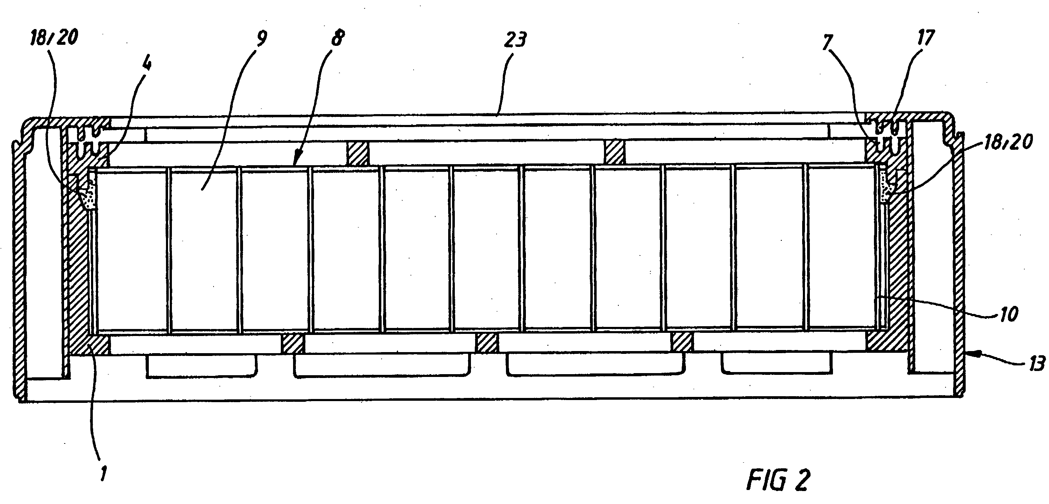

Zusammenbau des Filterelements:
Zunächst wird von der offenen Seite des Filterelement-Kastens 1 der Filterpack 8 in den Filterelement-Kasten 1 eingelegt. Bei Verwendung eines Mini-pleat-Filterpacks wird dies mit der Seite nach oben in den Filterelement-Kasten 1 eingelegt, an der die Kantenabdichtungs-Klebstoffraupen 10 aufgetragen sind. Der eingelegte Filterpack 8 ist höher als der Ansatz der Verjüngung 3 am oberen Rand des Kastens 1, d.h. der Filterpack 8 steht über den Ansatz der Verjüngung 3 hinaus. Hierdurch verbleibt ein umlaufender Freiraum 18 zwischen dem Kasten 1 und dem Filterpack 8 (Figuren 1 und 3). Dieser Freiraum 18 wird nun mit Heißkleber oder anderem Kleber 20 aufgefüllt. Bei Verwendung eines Mini-pleat Filterpacks fließt der Klebstoff bis zu den Kantenabdichtungs-Klebstoffraupen 10 und bildet somit eine vollkommene Dichtung und Verbindung zwischen den Kantenabdichtungs-Klebstoffraupen 10 und der seitlichen Oberkante des Filterelement-Kastens 1. Im noch weichen, nicht verfestigten Zustand des Heißklebers wird der Filterelement-Deckel 4 auf den Kasten 1 aufgesetzt und angedrückt (Figur 2). Dies bewirkt ein Eintauchen des umlaufenden Versatzes 6 des Deckels 4 in den mit Klebestoff gefüllten, umlaufenden Freiraum 18. Sobald der Klebstoff getrocknet ist, ergibt sich hierdurch zwischen Deckel 4 und Kasten 1 eine feste und absolut dichte Verbindung.

Einbau des Filterelements in der korrespondierenden Filteraufnahme:
Herkömmliche Wechselfilterelemente werden meist zusammen mit Gummi- oder Silikondichtungen in die Filterelementaufnahme eingesetzt, um ein Vorbeiströmen des zu filternden Mediums zu verhindern und eine sichere Dichtwirkung zu erreichen.

Beim erfindungsgemäßen Filterelement findet die Dichtung durch eine oder mehrere Dichtungsrillen 7 im Filterelement-Deckel 4 oder -Kasten 1 (nicht dargestellt) und eine oder mehrere korrespondierende Dichtungsstege 17 in der Filterelementaufnahme 13 statt.

Gemäß Figur 2 wird das Filterelement in den Einschub 16 der Filterelement-Aufnahme 13 eingesetzt, derart, daß die Dichtungsstege 17 der Filterelement-Aufnahme 13 in Eingriff mit den Dichtungsrillen 7 des Filterelement-Deckels 4 gelangen.

Hierbei ist das feste aber nachgiebige Material des Filterelement-Deckels 4 essentiell. Die Dichtung wird durch zwei Prozesse erreicht, die in Kombination oder allein tätig sein können.

Erstens, durch die Anpressung des/der rigiden Dichtsteg(e) 17 in die etwas schmalere(n) Dichtungsrille(n) 7. Die Dichtung findet durch den seitlichen Anpressdruck des nachgiebigen Materials auf die Dichtungsstege 17 statt. Zweitens durch das Aufsetzen und das Einstecken der Oberkante des Dichtstegs 17 in den Boden der etwas kürzeren Dichtungsrille 7 im Filterelement-Deckel 4. Die Dichtung findet hier auf der Oberkante des Dichtungsstegs 17 statt.

Das Festlegen und Anpressen des Filterelements in der Filterelementaufnahme 4 kann über diverse Klemmen oder Schnappverschlüsse (nicht dargestellt) stattfinden.

Das Festlegen und Anpressen des Filterelements in der Filterelementaufnahme 4 kann über diverse Klemmen oder Schnappverschlüsse (nicht dargestellt) stattfinden.

Vorzugsweise findet die Anströmung des Filterelements derart statt, daß das Filterelement von der Strömung in die Filterelement-Aufnahme 13 hinein auf den Dichtungssteg 17 gepreßt wird (in Figur 2: Anströmung von unten).

Falls es im besonderen Anwendungsfällen notwendig erscheint, kann eine Dichtungsmasse, z.B. Silikonpaste, in die Dichtungsrillen 7 eingebracht werden, um so die Dichtwirkung zu erhöhen.

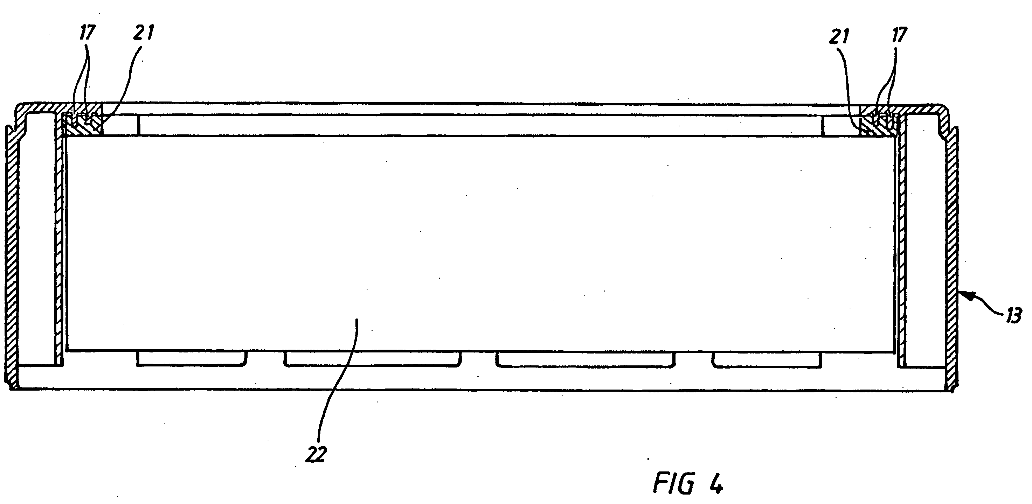

Figur 4 zeigt eine Anwendung, die nicht Teil des Anspruchsbegehrens ist, bei der auch ein Einsatz von herkömmlichen Filterelementen 22 ohne Dichtungsrillen 7 in der Filterelement-Aufnahme 13 möglich ist. Dazu ist ein Gummiprofil 21 mit eingearbeiteten Dichtungsrillen oder ähnliches auf die Dichtungsstege 17 der Filterelement-Aufnahme 13 gesteckt, so daß sich eine ebene Anlagefläche für das Filterelement 22 ergibt. Durch die Elastizität des Gummiprofils 21 ist eine gute Abdichtung gewährleistet.

### Zeichnungslegende

- 1: Filterelement-Kasten
- 2: Verstrebung
- 3: Verjüngung
- 4: Filterelement-Deckel
- 5: Verstrebung
- 6: Versatz
- 7: Dichtungsrille
- 8: Filterpack
- 9: Filtermedium
- 10: Klebstoffraupen-Kantenabdichtung
- 11: Vlies
- 12: Adsorptionsmedium
- 13: Filterelement-Aufnahme
- 14: Tragrahmen
- 15: Trennwand
- 16: Einschub
- 17: Dichtungssteg
- 18: Freiraum
- 19: Klebstoffraupen-Abstandshalter
- 20: Umlaufend eingefüllte Klebstoffdichtung
- 21: Gummiprofil
- 22: Filterelement ohne Dichtungsrillen
- 23: Durchgangsöffnung

## Patentansprüche

1. Filterelement mit Filterelement-Aufnahme, wobei das Filterelement (1,4,8) in die Filterelement-Aufnahme (13) einsetzbar ist und einen Filterelement-Kasten (1) umfasst, in welchem ein Filterpack (8) eingesetzt ist,
**dadurch gekennzeichnet,**
**daß** der Filterelement-Kasten (1) einen Filterelement-Deckel (4) aufweist, an dem ein umlaufender Versatz (6) angeordnet ist, welcher in eine zugeordnete Verjüngung (3) des Filterelement-Kastens (1) eingreift, und die Filterelement-Aufnahme (13) mit mindestens einem angeformten Dichtungssteg (17) in mindestens eine zugeordnete Dichtungsrille (7) des Filterelement-Deckels (4) oder -Kastens (1) abdichtend eingreift.

2. Filterelement mit Filterelement-Aufnahme nach Anspruch 1, **dadurch gekennzeichnet, daß** der Filterpack (8) aus einem plissierten Filtermedium (9) besteht.

3. Filterelement mit Filterelement-Aufnahme nach Anspruch 1, **dadurch gekennzeichnet, daß** der Filterpack (8) aus einer oder mehreren Lagen eines Vliesstoffes (11) besteht.

4. Filterelement mit Filterelement-Aufnahme nach Anspruch 3, **dadurch gekennzeichnet, daß** zwischen den Lagen von Vliesstoff (11) ein Adsorptionsmedium (12) angeordnet ist.

5. Filterelement mit Filterelement-Aufnahme nach einem der Ansprüche 1-4, **dadurch gekennzeichnet, daß** das in den Filterelement-Kasten (1) eingesetzte Filterpack (8) über den Ansatz der Verjüngung (3) der Wand des Filterelement-Kasten (1) hinausragt.

6. Filterelement mit Filterelement-Aufnahme nach einem der Ansprüche 1-5, **dadurch gekennzeichnet, daß** bei eingesetztem Filterpack (8) im Bereich der Verjüngung (3) ein umlaufender Freiraum (18) zwischen dem Kasten (1) und dem Filterpack (8) verbleibt, der umlaufend mit Heißkleber oder anderem Kleber (20) aufgefüllt wird, und im nicht verfestigten Zustand des Heißklebers der Filterelement-Deckel (4) auf den Kasten (1) aufgesetzt und angedrückt wird.

7. Filterelement mit Filterelement-Aufnahme nach einem der Ansprüche 1-6, **dadurch gekennzeichnet, daß** der Filterelement-Deckel (4) und der Filterelement-Kasten (1) aus einem Formteil aus geschäumten Kunststoff besteht.

8. Filterelement mit Filterelement-Aufnahme nach einem der Ansprüche 1-7, **dadurch gekennzeichnet, daß** eine Dichtungsmasse in die Dichtungsrillen (7) eingebracht ist.

## Claims

1. Filter element with filter element holder, wherein the filter element (1, 4, 8) is insertable into the filter element holder (13) and comprises a filter element box (1) in which a filter pack (8) is inserted, **characterized in that** the filter element box (1) has a filter element cover (4) on which a peripheral flange (6) is arranged which engages into an associated taper (3) of the filter element box (1), and the filter element holder (13) engages in a sealing manner by at least one integrally moulded sealing web (17) into at least one associated sealing groove (7) of the filter element cover (4) or box (1).

2. Filter element with filter element holder according to Claim 1, **characterized in that** the filter pack (8) comprises a pleated filter medium (9).

3. Filter element with filter element holder according to Claim 1, **characterized in that** the filter pack (8) comprises one or more layers of a non-woven material (11).

4. Filter element with filter element holder according to Claim 3, **characterized in that** an adsorption medium (12) is disposed between the layers of non-woven material (11).

5. Filter element with filter element holder according to any one of Claims 1-4, **characterized in that** the filter pack (8) inserted into the filter element box (1) projects beyond the shoulder of the taper (3) of the wall of the filter element box (1).

6. Filter element with filter element holder according to any one of Claims 1-5, **characterized in that** with filter pack (8) inserted, a peripheral void (18) is left between the box (1) and the filter pack (8) in the region of the taper (3), which void is filled all round with hot-melt adhesive or other adhesive (20), and the filter element cover (4) is placed on the box (1) and pressed home while the hot-melt adhesive is in the non-hardened state.

7. Filter element with filter element holder according to any one of Claims 1-6, **characterized in that** the filter element cover (4) and filter element box (1) are formed as a moulding of foamed plastic material.

8. Filter element with filter element holder according to any one of Claims 1-7, **characterized in that** a sealing compound is inserted into the sealing grooves (7).

## Revendications

1. Elément filtrant avec logement pour élément filtrant, l'élément filtrant (1, 4, 8) pouvant être placé dans ledit logement (13) et comprenant un boîtier d'élément filtrant (1) dans lequel est placée une masse filtrante (8),
**caractérisé en ce que** le boîtier d'élément filtrant (1) comporte un couvercle (4) sur lequel est disposé une partie désaxée périphérique (6) qui pénètre dans une partie effilée associée (3) du boîtier (1), et le logement pour élément filtrant (13) pénètre avec au moins une nervure d'étanchéité rapportée (17) dans au moins une rainure d'étanchéité associée (7) du couvercle (4) ou du boîtier d'élément filtrant (1).

2. Elément filtrant avec logement pour élément filtrant selon la revendication 1, **caractérisé en ce que** la masse filtrante (8) se compose d'un produit filtrant plissé (9).

3. Elément filtrant avec logement pour élément filtrant selon la revendication 1, **caractérisé en ce que** la masse filtrante (8) se compose d'une ou plusieurs couches d'une matière non-tissée (11).

4. Elément filtrant avec logement pour élément filtrant selon la revendication 3, **caractérisé en ce qu'**un produit d'adsorption (12) est disposé entre les couches de la matière non-tissée (11).

5. Elément filtrant avec logement pour élément filtrant selon l'une des revendications 1 à 4, **caractérisé en ce que** la masse filtrante (8) placée dans le boîtier d'élément filtrant (1) dépasse de l'épaulement de la partie effilée (3) de la paroi dudit boîtier (1).

6. Elément filtrant avec logement pour élément filtrant selon l'une des revendications 1 à 5, **caractérisé en ce que** lorsque la masse filtrante (8) est en place, il reste dans la zone de la partie effilée (3) un espace libre périphérique (18) entre le boîtier (1) et ladite masse filtrante (8), lequel espace libre est rempli, tout autour, d'un adhésif à chaud ou d'un autre adhésif (20), et en position non durcie de l'adhésif à chaud, on pose et on presse le couvercle d'élément filtrant (4) sur le boîtier (1).

7. Elément filtrant avec logement pour élément filtrant selon l'une des revendications 1 à 6, **caractérisé en ce que** le couvercle d'élément filtrant (4) et le boîtier d'élément filtrant (1) se composent d'un élément profilé en matière plastique expansée.

8. Elément filtrant avec logement pour élément filtrant selon l'une des revendications 1 à 7, **caractérisé en ce qu'**une masse d'étanchéité est placée dans les rainures d'étanchéité.
